# EUROPEAN PATENT APPLICATION

(11) **EP 4 852 207 A1**
(43) Date of publication of application: **09.12.2026**
(21) Application number: 25747672.1
(22) Date of filing: 21.01.2025
(51) Int. Cl.: H01M 50/586, H01M 50/593

(54) **BATTERY CELL AND ELECTRIC DEVICE**

(30) Priority: 01.02.2024 CN 202410147486
(71) Applicant: Ningde Amperex Technology Limited, Ningde, Fujian 352100 (CN)
(72) Inventor: WANG, Zhongyi, Ningde, Fujian 352100 (CN)
(74) Representative: Kraus & Lederer PartGmbB
(86) International application number: PCT/CN2025/073795
(87) International publication number: WO 2025/162100

(57) **Abstract**

This application provides a battery cell and an electric device, where the battery cell includes a laminated electrode assembly. The electrode assembly includes a plurality of first electrode plates and a plurality of second electrode plates stacked along a first direction. A corner of each first electrode plate includes a first notch and a first uncoated foil region, and a corner of each second electrode plate includes a second notch and a second uncoated foil region. When observed along the first direction, the first uncoated foil region and the second notch at least partially overlap, the second uncoated foil region and the first notch at least partially overlap, and the first uncoated foil region and the second uncoated foil region are spaced apart. The plurality of first uncoated foil regions are stacked along the first direction, and the plurality of second uncoated foil regions are stacked along the first direction. Thus, space reserved for accommodating the first uncoated foil region and the second uncoated foil region between the electrode assembly and a housing can be reduced, increasing the energy density of the battery cell. Additionally, when the battery cell is subjected to an external force or drops, the likelihood of the electrode assembly shaking relative to the housing is reduced, and the likelihood of a short circuit in the battery cell is also reduced.

## Description

### CROSS-REFERENCE TO RELATED APPLICATIONS

This application claims priority to Chinese Patent Application No. CN 202410147486.5, filed on February 1, 2024 and entitled "BATTERY CELL AND ELECTRIC DEVICE", which is incorporated herein by reference with its entirety.

### TECHNICAL FIELD

This application relates to the field of battery technology, and specifically relates to a battery cell and an electric device.

### BACKGROUND

With the rapid development of electronic information technology, various electronic devices are advancing toward intelligence and multifunctionality, imposing increasingly high requirements on various performance aspects of batteries.

Currently, tabs of an electrode assembly are generally led out from one end in a length direction of an electrode plate, necessitating a relatively large space to be reserved between a housing accommodating the electrode assembly and an end of the electrode assembly where the tabs are located, which affects the energy density of a battery cell. Additionally, when the battery cell is subjected to an external force or drops, the electrode assembly is prone to shaking relative to the housing, potentially causing a short circuit due to contact between the tabs and the electrode plate, thereby increasing the risk of thermal runaway in the battery cell.

### SUMMARY

This application provides a battery cell and an electric device, which can increase the energy density of the battery cell and reduce the likelihood of a short circuit in the battery cell.

According to a first aspect, this application provides a battery cell including an electrode assembly, where the electrode assembly is a laminated structure. The electrode assembly includes a plurality of first electrode plates and a plurality of second electrode plates stacked along a first direction, where the first electrode plates and the second electrode plates have opposite polarities. A corner of each first electrode plate includes a first notch and a first uncoated foil region, and a corner of each second electrode plate includes a second notch and a second uncoated foil region. When observed along the first direction, the first uncoated foil region and the second notch at least partially overlap, and the second uncoated foil region and the first notch at least partially overlap. The first uncoated foil region and the second uncoated foil region are spaced apart. The first uncoated foil regions of the plurality of first electrode plates are stacked along the first direction, and the second uncoated foil regions of the plurality of second electrode plates are stacked along the first direction.

In the above technical solution, a corner of each first electrode plate includes a first notch and a first uncoated foil region, and a corner of each second electrode plate includes a second notch and a second uncoated foil region. When observed along the first direction, the first uncoated foil region and the second notch at least partially overlap, and the second uncoated foil region and the first notch at least partially overlap, reducing volumes by which the first uncoated foil region and the second uncoated foil region protrude from the first electrode plate and the second electrode plate, and reducing space reserved for accommodating the first uncoated foil region and the second uncoated foil region between the electrode assembly and a housing, thereby increasing the energy density of the battery cell. Additionally, when the battery cell is subjected to an external force or drops, the likelihood of the electrode assembly shaking relative to the housing is reduced, and the likelihood of a short circuit occurring due to contact between the first uncoated foil region and the second electrode plate or between the second uncoated foil region and the first electrode plate is also reduced, thereby reducing the risk of thermal runaway in the battery cell. Furthermore, the first uncoated foil region and the second uncoated foil region are located at the same corner of the electrode assembly, further reducing the space occupied by the first uncoated foil region and the second uncoated foil region, thereby further increasing the energy density of the battery cell. The first uncoated foil region and the second uncoated foil region are spaced apart, reducing the likelihood of a short circuit occurring due to contact between the first uncoated foil region and the second uncoated foil region. The first uncoated foil regions of the plurality of first electrode plates are stacked along the first direction, and the second uncoated foil regions of the plurality of second electrode plates are stacked along the first direction, facilitating connection of the plurality of first uncoated foil regions and connection of the plurality of second uncoated foil regions, thereby enabling an external apparatus to be electrically connected to the plurality of first electrode plates through the first uncoated foil regions and to be electrically connected to the plurality of second electrode plates through the second uncoated foil regions.

In some embodiments of this application, when observed along the first direction, the first notch and the second notch partially overlap.

In the above technical solution, when observed along the first direction, the first notch and the second notch partially overlap, reserving a spacing between the first uncoated foil region and the second uncoated foil region, thereby reducing the likelihood of a short circuit occurring due to contact between the first uncoated foil region and the second uncoated foil region.

In some embodiments of this application, the first electrode plate includes a first coated region. Along a length direction of the first electrode plate, the first uncoated foil region does not extend beyond the first coated region, and along a width direction of the first electrode plate, the first uncoated foil region does not extend beyond the first coated region. The second electrode plate includes a second coated region. Along a length direction of the second electrode plate, the second uncoated foil region does not extend beyond the second coated region, and along a width direction of the second electrode plate, the second uncoated foil region does not extend beyond the second coated region.

In the above technical solution, along the length direction of the first electrode plate, the first uncoated foil region does not extend beyond the first coated region, and along the width direction of the first electrode plate, the first uncoated foil region does not extend beyond the first coated region, so that the first uncoated foil region does not protrude from the first electrode plate, and no space needs to be reserved between the electrode assembly and the housing to accommodate the first uncoated foil region, thereby further increasing the energy density of the battery cell. Additionally, when the battery cell is subjected to an external force or drops, the likelihood of the electrode assembly shaking relative to the housing is further reduced, and the likelihood of a short circuit occurring due to contact between the first uncoated foil region and the second electrode plate is also further reduced, thereby further reducing the risk of thermal runaway in the battery cell.

Along the length direction of the second electrode plate, the second uncoated foil region does not extend beyond the second coated region, and along the width direction of the second electrode plate, the second uncoated foil region does not extend beyond the second coated region, so that the second uncoated foil region does not protrude from the second electrode plate, and no space needs to be reserved between the electrode assembly and the housing to accommodate the second uncoated foil region, thereby further increasing the energy density of the battery cell. Additionally, when the battery cell is subjected to an external force or drops, the likelihood of the electrode assembly shaking relative to the housing is further reduced, and the likelihood of a short circuit occurring due to contact between the second uncoated foil region and the first electrode plate is also further reduced, thereby further reducing the risk of thermal runaway in the battery cell.

In some embodiments of this application, the first coated region includes a first edge along the length direction of the first electrode plate, the first uncoated foil region includes a second edge along the length direction of the first electrode plate, and the first edge is flush with the second edge; and/or, the second coated region includes a third edge along the width direction of the second electrode plate, the second uncoated foil region includes a fourth edge along the width direction of the second electrode plate, and the third edge is flush with the fourth edge.

In the above technical solution, making the first edge flush with the second edge can facilitate preparation of the first uncoated foil region; and making the third edge flush with the fourth edge can facilitate preparation of the second uncoated foil region.

In some embodiments of this application, a spacing distance between the first uncoated foil region and the second uncoated foil region is denoted as D1, satisfying 0.4 mm ≤ D1 ≤ 1 mm.

In the above technical solution, when the spacing distance D1 between the first uncoated foil region and the second uncoated foil region is greater than or equal to 0.4 mm, the spacing distance between the first uncoated foil region and the second uncoated foil region is relatively large, reducing the likelihood of a short circuit occurring due to contact between the first uncoated foil region and the second uncoated foil region, thereby reducing the risk of thermal runaway in the battery cell. When the spacing distance D1 between the first uncoated foil region and the second uncoated foil region is less than or equal to 1 mm, the spacing distance between the first uncoated foil region and the second uncoated foil region is relatively small, so that a small spacing is occupied, which is conducive to increasing the energy density of the battery cell. When the spacing distance D1 between the first uncoated foil region and the second uncoated foil region is between 0.4 mm and 1 mm, the likelihood of a short circuit occurring due to contact between the first uncoated foil region and the second uncoated foil region is reduced, reducing the risk of thermal runaway in the battery cell and helping to increase the energy density of the battery cell.

In some embodiments of this application, the battery cell further includes a first insulating member, and at least a portion of the first insulating member is disposed between the first uncoated foil region and the second uncoated foil region.

In the above technical solution, disposing the first insulating member between the first uncoated foil region and the second uncoated foil region can reduce the likelihood of a short circuit occurring due to contact between the first uncoated foil region and the second uncoated foil region, thereby reducing the risk of thermal runaway in the battery cell.

In some embodiments of this application, the first insulating member wraps at least a portion of the plurality of first uncoated foil regions.

In the above technical solution, making the first insulating member wrap at least a portion of the plurality of first uncoated foil regions can achieve a better insulation effect between the first uncoated foil region and the second uncoated foil region, further reducing the likelihood of a short circuit occurring due to contact between the first uncoated foil region and the second uncoated foil region, thereby further reducing the risk of thermal runaway in the battery cell.

In some embodiments of this application, the battery cell further includes a housing, and the electrode assembly is disposed within the housing. When observed along the first direction, the first insulating member includes a first insulating portion and a second insulating portion. The first insulating portion is disposed between the first uncoated foil region and the second uncoated foil region, and the second insulating portion is disposed between the first uncoated foil region and an inner wall of the housing.

In the above technical solution, when observed along the first direction, the first insulating member includes a first insulating portion and a second insulating portion. The first insulating portion is disposed between the first uncoated foil region and the second uncoated foil region, and the second insulating portion is disposed between the first uncoated foil region and the inner wall of the housing, so that the first insulating portion can provide insulation between the first uncoated foil region and the second uncoated foil region, and the second insulating portion can provide insulation between the first uncoated foil region and the housing, reducing the likelihood of a short circuit occurring due to contact between the first uncoated foil region and the first uncoated foil region or contact between the first uncoated foil region and the housing, thereby reducing the risk of thermal runaway in the battery cell.

In some embodiments of this application, the battery cell further includes an electrode terminal and a first adapter. The first adapter is connected to the plurality of first uncoated foil regions. The housing includes a first wall, and the electrode terminal is disposed on the first wall. The second insulating portion is disposed between the first wall and the first uncoated foil region, and the electrode terminal penetrates through the second insulating portion and is connected to the first adapter.

In the above technical solution, the battery cell further includes an electrode terminal and a first adapter. The first adapter is connected to the plurality of first uncoated foil regions. The housing includes a first wall, and the electrode terminal is disposed on the first wall. The second insulating portion is disposed between the first wall and the first uncoated foil region, and the electrode terminal penetrates through the second insulating portion and is connected to the first adapter, so that the plurality of first uncoated foil regions can be electrically connected to an external apparatus through the first adapter and the electrode terminal, and the second insulating portion can provide insulation between the electrode terminal and the housing, reducing the likelihood of a short circuit occurring due to contact between the first uncoated foil region and the housing, thereby reducing the risk of thermal runaway in the battery cell.

In some embodiments of this application, the first insulating member further includes a third insulating portion. The third insulating portion is disposed on a side of the plurality of first uncoated foil regions along the first direction, and the third insulating portion is connected to the first insulating portion and the second insulating portion.

In the above technical solution, the third insulating portion is disposed on a side of the plurality of first uncoated foil regions along the first direction, and the third insulating portion is connected to the first insulating portion and the second insulating portion, so that insulation can be provided between the first uncoated foil region and the housing in the first direction, reducing the likelihood of a short circuit occurring due to contact between the first uncoated foil region and the housing, thereby reducing the risk of thermal runaway in the battery cell.

In some embodiments of this application, along the first direction, the first uncoated foil regions of the plurality of first electrode plates converge toward a center to form a first converged portion, and the third insulating portion supports the first converged portion.

In the above technical solution, along the first direction, the first uncoated foil regions of the plurality of first electrode plates converge toward a center to form a first converged portion, so that the plurality of first uncoated foil regions can be connected in a simple manner, achieving simple operation, facilitating connection of the plurality of first uncoated foil regions to the first adapter, and allowing for a small dimension of the first uncoated foil region in an extension direction of the first uncoated foil region, thereby reducing the space occupied by the first uncoated foil region, which is conducive to increasing the energy density of the battery cell. The third insulating portion supporting the first converged portion can facilitate connection of the first adapter to the electrode terminal.

In some embodiments of this application, along the first direction, the second uncoated foil regions of the plurality of second electrode plates converge toward a center to form a second converged portion. The battery cell further includes a second adapter, and the second adapter connects the housing and the second converged portion.

In the above technical solution, along the first direction, the second uncoated foil regions of the plurality of second electrode plates converge toward a center to form a second converged portion, the battery cell further includes a second adapter, and the second adapter connects the housing and the second converged portion, so that the plurality of second uncoated foil regions can be connected in a simple manner, achieving simple operation, facilitating connection of the plurality of second uncoated foil regions to the first adapter, and allowing for a small dimension of the second uncoated foil region in an extension direction of the second uncoated foil region, thereby reducing the space occupied by the second uncoated foil region, which is conducive to increasing the energy density of the battery cell. Furthermore, the plurality of second uncoated foil regions can be electrically connected to an external apparatus through the second adapter and the housing.

In some embodiments of this application, the second notch and the second uncoated foil region are located at an end of the second electrode plate in a length direction. The battery cell further includes a housing, and the electrode assembly is accommodated within the housing. Along the length direction of the second electrode plate, a distance from the end of the second electrode plate provided with the second uncoated foil region and the second notch to an inner wall of the housing is denoted as D2, satisfying 0.4 mm ≤ D2 ≤ 1 mm.

In the above technical solution, the second notch and the second uncoated foil region are located at an end of the second electrode plate in the length direction, so that the first uncoated foil region and the second uncoated foil region can be led out of the end of the second electrode plate in the length direction, facilitating electrical connection of the battery cell to an external apparatus through the first uncoated foil region and the second uncoated foil region. The distance D2 from the end of the second electrode plate provided with the second uncoated foil region and the second notch to the inner wall of the housing along the length direction of the second electrode plate being greater than or equal to 0.4 mm can facilitate assembly of the electrode assembly and the housing and helps an electrolyte to be accommodated in the housing. The distance D2 from the end of the second electrode plate provided with the second uncoated foil region and the second notch to the inner wall of the housing along the length direction of the second electrode plate being less than or equal to 1 mm allows for a small spacing between the electrode assembly and the housing, resulting in a high energy density of the battery cell. Therefore, the distance D2 from the end of the second electrode plate provided with the second uncoated foil region and the second notch to the inner wall of the housing along the length direction of the second electrode plate being between 0.4 mm and 1 mm can not only facilitate assembly of the electrode assembly and the housing and help the electrolyte to be accommodated in the housing, but also allow for a high energy density of the battery cell.

In some embodiments of this application, the first notch is configured in a triangular shape; and/or, the second notch is configured in a triangular shape.

In the above technical solution, the first notch being configured in a triangular shape facilitates preparation of the first notch and allows for a small space occupied by the first notch, helping to increase the energy density of the battery cell. The second notch being configured in a triangular shape facilitates preparation of the second notch and allows for a small space occupied by the second notch.

In some embodiments of this application, the first uncoated foil region is configured in a triangular shape; and/or, the second uncoated foil region is configured in a triangular shape.

In the above technical solution, the first uncoated foil region being configured in a triangular shape facilitates preparation of the first uncoated foil region, facilitates convergence of the plurality of first uncoated foil regions, and allows for a small space occupied by the first uncoated foil region, helping to increase the energy density of the battery cell. The second uncoated foil region being configured in a triangular shape facilitates preparation of the second uncoated foil region, facilitates convergence of the plurality of second uncoated foil regions, and allows for a small space occupied by the second uncoated foil region, helping to increase the energy density of the battery cell.

In some embodiments of this application, the first electrode plate is a positive electrode plate, and the second electrode plate is a negative electrode plate.

According to a second aspect, this application provides an electric device. The electric device includes the battery cell as described above, where the battery cell is configured to provide electrical energy.

### BRIEF DESCRIPTION OF DRAWINGS

To more clearly illustrate the technical solutions of some embodiments of this application, the drawings required for use in some embodiments are briefly introduced below. It should be understood that the following drawings only show some embodiments of this application and should not be regarded as limiting the scope. For those skilled in the art, other related drawings can also be obtained based on these drawings.
FIG. 1 is a schematic diagram of a three-dimensional structure of a battery cell according to some embodiments of this application;
FIG. 2 is a schematic structural exploded view of a battery cell according to some embodiments of this application;
FIG. 3 is a schematic structural exploded view of an electrode assembly of a battery cell according to some embodiments of this application;
FIG. 4 is a schematic structural diagram of a first electrode plate of a battery cell according to some embodiments of this application;
FIG. 5 is a schematic structural diagram of a second electrode plate of a battery cell according to some embodiments of this application;
FIG. 6 is a schematic local enlarged view of a partial structure of a battery cell according to some embodiments of this application;
FIG. 7 is a schematic structural diagram of a battery cell from one perspective according to some embodiments of this application;
FIG. 8 is a schematic local enlarged structural view of a partial structure of a battery cell according to some embodiments of this application;
FIG. 9 is a schematic local enlarged view of a cross-sectional structure of the battery cell in FIG. 7 along A-A direction;
FIG. 10 is a schematic local enlarged view of a cross-sectional structure of the battery cell in FIG. 7 along B-B direction;
FIG. 11 is a schematic local enlarged view of a cross-sectional structure of a battery cell according to some other embodiments of this application;
FIG. 12 is a schematic local enlarged view of a cross-sectional structure of the battery cell in FIG. 7 along C-C direction;
FIG. 13 is a schematic structural diagram of a separator of a battery cell according to some embodiments of this application; and
FIG. 14 is a schematic local enlarged view of a cross-sectional structure of the battery cell in FIG. 7 along E-E direction.

Reference signs: 10. battery cell; 100. electrode assembly; 110. first electrode plate; 111. first notch; 112. first uncoated foil region; 112a. first converged portion; 1121. second edge; 113. first coated region; 1131. first edge; 120. second electrode plate; 121. second notch; 122. second uncoated foil region; 122a. second converged portion; 1221. fourth edge; 123. second coated region; 1231. third edge; 130. separator; 131. third notch; 200. first insulating member; 210. first insulating portion; 220. second insulating portion; 230. third insulating portion; 300. housing; 310. shell; 311. first wall; 312. second wall; 320. shell cover; 410. electrode terminal; 420. first adapter; 430. second adapter; 440. second insulating member; X. first direction; Y. length direction of first electrode plate; and Z. width direction of first electrode plate.

### DETAILED DESCRIPTION

To make the objectives, technical solutions, and advantages of this application clearer, the technical solutions in some embodiments of this application are described clearly below with reference to the drawings in these embodiments of this application. It is evident that the described embodiments are some embodiments rather than all embodiments of this application. Based on these embodiments in this application, all other embodiments obtained by those skilled in the art fall within the protection scope of this application.

Unless otherwise defined, all technical and scientific terms used in this application have the same meaning as commonly understood by those skilled in the technical field of this application. Terms used in the specification of this application are for the purpose of describing specific embodiments only and are not intended to limit this application. The terms "include", "comprise", and any variations thereof in the specification, claims, and descriptions of the drawings of this application are intended to cover non-exclusive inclusion.

The terms "first", "second", and the like in the specification, claims, or drawings of this application are used to distinguish between different objects rather than to describe a specific order or a primary-secondary relationship.

Reference to an "embodiment" in this application means that a specific feature, structure, or characteristic described in connection with some embodiments may be included in at least one embodiment of this application. The appearance of the phrase in various places in the specification does not necessarily refer to the same embodiment, nor is it an independent or alternative embodiment mutually exclusive with other embodiments.

The term "flush with" in this application does not refer to strict "flush with" but approximate "flush with". In consideration of a process tolerance, "flush with" is confirmed as long as the tolerance is within 0.2 mm.

In some embodiments of this application, the same reference signs denote the same components, and for brevity, detailed descriptions of the same components are omitted in different embodiments. It should be understood that the dimensions such as thickness, length, and width of various components in some embodiments of this application shown in the drawings, as well as the overall thickness, length, and width of an integrated apparatus, are for illustrative purposes only and do not constitute any limitation on this application.

A battery cell includes a housing and an electrode assembly, where the electrode assembly is accommodated within the housing. The electrode assembly includes an electrode plate and a tab, where the tab generally extends out of the housing from one end of the electrode plate in a length direction to be connected to an external apparatus. Therefore, a relatively large space needs to be reserved between the housing and the end of the electrode assembly where the tab is disposed, to accommodate the tab part, so that the space within the housing for accommodating the electrode plate is compressed, thereby affecting the energy density of the battery cell. Additionally, due to a large spacing between the electrode assembly and the housing, when the battery cell is subjected to an external force or drops, the electrode assembly is prone to shaking relative to the housing. The tab is fixed relative to the housing, so that the tab may move relative to the electrode plate, potentially leading to a short circuit upon contact with the electrode plate, thereby increasing the risk of thermal runaway in the battery cell.

To increase the energy density of the battery cell and reduce the likelihood of a short circuit in the battery cell, this application provides a battery cell. The battery cell includes an electrode assembly, where the electrode assembly is a laminated structure. The electrode assembly includes a plurality of first electrode plates and a plurality of second electrode plates stacked along a first direction, where the first electrode plates and the second electrode plates have opposite polarities. A corner of each first electrode plate includes a first notch and a first uncoated foil region, and a corner of each second electrode plate includes a second notch and a second uncoated foil region. When observed along the first direction, the first uncoated foil region and the second notch at least partially overlap, and the second uncoated foil region and the first notch at least partially overlap. The first uncoated foil region and the second uncoated foil region are spaced apart. The first uncoated foil regions of the plurality of first electrode plates are stacked along the first direction, and the second uncoated foil regions of the plurality of second electrode plates are stacked along the first direction.

In the battery cell with such structure, a corner of each first electrode plate includes a first notch and a first uncoated foil region, and a corner of each second electrode plate includes a second notch and a second uncoated foil region. When observed along the first direction, the first uncoated foil region and the second notch at least partially overlap, and the second uncoated foil region and the first notch at least partially overlap, reducing volumes by which the first uncoated foil region and the second uncoated foil region protrude from the first electrode plate and the second electrode plate, reducing the space reserved for accommodating the first uncoated foil region and the second uncoated foil region between the electrode assembly and the housing, thereby increasing the energy density of the battery cell. Additionally, when the battery cell is subjected to an external force or drops, the likelihood of the electrode assembly shaking relative to the housing is reduced, and the likelihood of a short circuit occurring due to contact between the first uncoated foil region and the second electrode plate or between the second uncoated foil region and the first electrode plate is also reduced, thereby reducing the risk of thermal runaway in the battery cell. Furthermore, the first uncoated foil region and the second uncoated foil region are located at the same corner of the electrode assembly, further reducing the space occupied by the first uncoated foil region and the second uncoated foil region, thereby further increasing the energy density of the battery cell. The first uncoated foil region and the second uncoated foil region are spaced apart, reducing the likelihood of a short circuit occurring due to contact between the first uncoated foil region and the second uncoated foil region. The first uncoated foil regions of the plurality of first electrode plates are stacked along the first direction, and the second uncoated foil regions of the plurality of second electrode plates are stacked along the first direction, facilitating connection of the plurality of first uncoated foil regions and connection of the plurality of second uncoated foil regions, thereby enabling an external apparatus to be electrically connected to the plurality of first electrode plates through the first uncoated foil regions and to be electrically connected to the plurality of second electrode plates through the second uncoated foil regions.

The battery cell provided in some embodiments of this application may be a secondary battery or a primary battery, such as a lithium-ion battery, a sodium-ion battery, or a magnesium-ion battery, which is not limited in these embodiments of this application. An electrochemical apparatus may be cylindrical, flat, cuboid, or of another shape, which is not limited in these embodiments of this application either.

An embodiment of this application provides an electric device using a battery cell as a power source. The electric device may include, but is not limited to, a mobile phone, a tablet, a laptop, an electric toy, an electric tool, an electric bicycle, an electric vehicle, a ship, and a spacecraft.

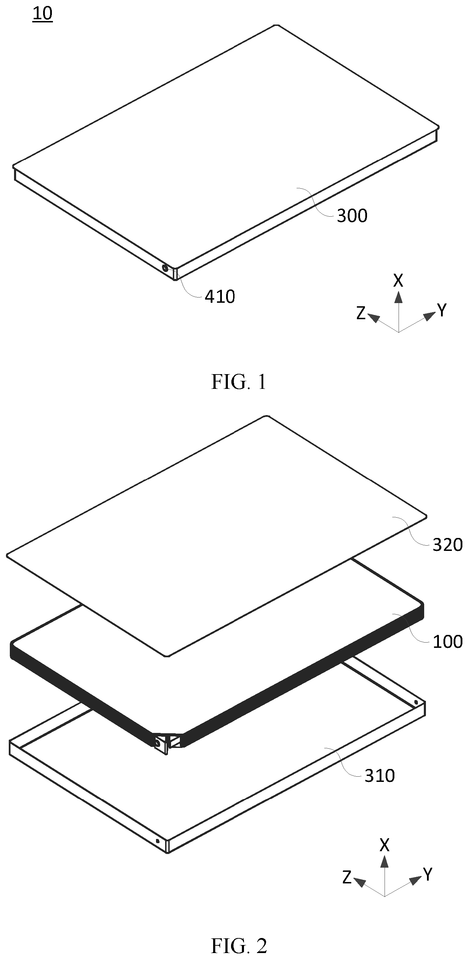

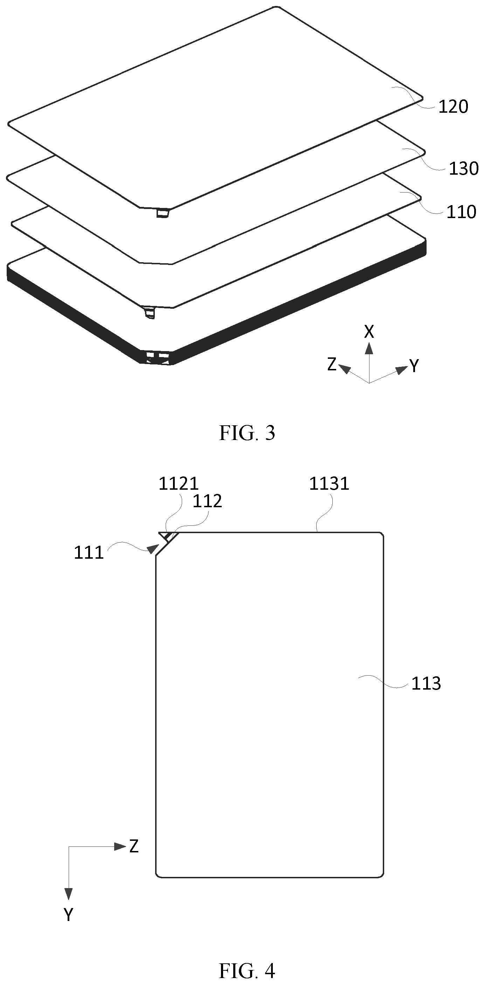

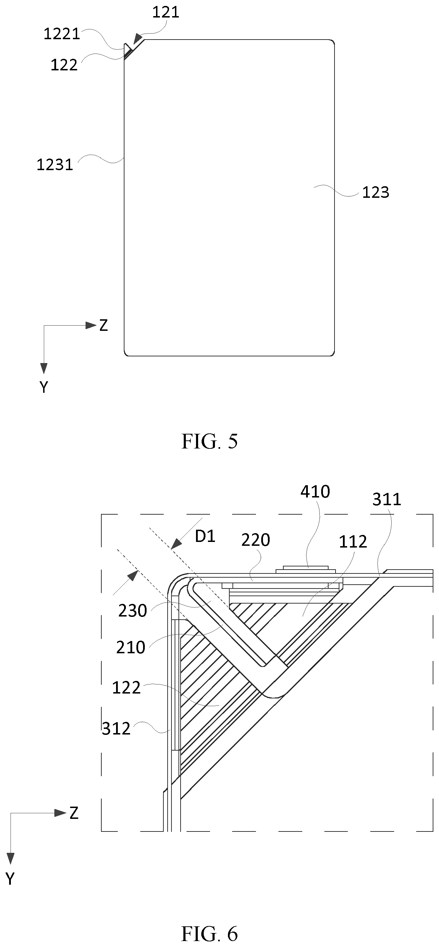

Referring to FIG. 1 to FIG. 5, FIG. 1 is a schematic diagram of a three-dimensional structure of a battery cell according to some embodiments of this application, FIG. 2 is a schematic structural exploded view of a battery cell according to some embodiments of this application, FIG. 3 is a schematic structural exploded view of an electrode assembly of a battery cell according to some embodiments of this application, FIG. 4 is a schematic structural diagram of a first electrode plate of a battery cell according to some embodiments of this application, and FIG. 5 is a schematic structural diagram of a second electrode plate of a battery cell according to some embodiments of this application.

An embodiment of this application provides a battery cell 10. The battery cell 10 includes an electrode assembly 100, where the electrode assembly 100 is a laminated structure. The electrode assembly 100 includes a plurality of first electrode plates 110 and a plurality of second electrode plates 120 stacked along a first direction X, where the first electrode plates 110 and the second electrode plates 120 have opposite polarities. A corner of each first electrode plate 110 includes a first notch 111 and a first uncoated foil region 112, and a corner of each second electrode plate 120 includes a second notch 121 and a second uncoated foil region 122. When observed along the first direction X, the first uncoated foil region 112 and the second notch 121 at least partially overlap, and the second uncoated foil region 122 and the first notch 111 at least partially overlap. The first uncoated foil region 112 and the second uncoated foil region 122 are spaced apart. The first uncoated foil regions 112 of the plurality of first electrode plates 110 are stacked along the first direction X, and the second uncoated foil regions 122 of the plurality of second electrode plates 120 are stacked along the first direction X.

A corner of each first electrode plate 110 includes a first notch 111 and a first uncoated foil region 112, a corner of each second electrode plate 120 includes a second notch 121 and a second uncoated foil region 122, and when observed along the first direction X, the first uncoated foil region 112 and the second notch 121 at least partially overlap, and the second uncoated foil region 122 and the first notch 111 at least partially overlap, so that the volumes by which the first uncoated foil region 112 and the second uncoated foil region 122 protrude from the first electrode plate 110 and the second electrode plate 120 are reduced, and the space reserved for accommodating the first uncoated foil region 112 and the second uncoated foil region 122 between the electrode assembly 100 and a housing 300 is reduced, thereby increasing the energy density of the battery cell 10. Additionally, when the battery cell 10 is subjected to an external force or drops, the likelihood of the electrode assembly 100 shaking relative to the housing 300 is reduced, and the likelihood of a short circuit occurring due to contact between the first uncoated foil region 112 and the second electrode plate 120 or between the second uncoated foil region 122 and the first electrode plate 110 is also reduced, thereby reducing the risk of thermal runaway in the battery cell 10. Furthermore, the first uncoated foil region 112 and the second uncoated foil region 122 are located at the same corner of the electrode assembly 100, further reducing the space occupied by the first uncoated foil region 112 and the second uncoated foil region 122, thereby further increasing the energy density of the battery cell 10. The first uncoated foil region 112 and the second uncoated foil region 122 are spaced apart, reducing the likelihood of a short circuit occurring due to contact between the first uncoated foil region 112 and the second uncoated foil region 122. The first uncoated foil regions 112 of the plurality of first electrode plates 110 are stacked along the first direction X, and the second uncoated foil regions 122 of the plurality of second electrode plates 120 are stacked along the first direction X, facilitating connection of the plurality of first uncoated foil regions 112 and connection of the plurality of second uncoated foil regions 122, thereby enabling an external apparatus to be electrically connected to the plurality of first electrode plates 110 through the first uncoated foil region 112 and to be electrically connected to the plurality of second electrode plates 120 through the second uncoated foil region 122.

In some embodiments, when observed along the first direction X, the first notch 111 and the second notch 121 partially overlap.

When observed along the first direction X, the first notch 111 and the second notch 121 partially overlap, so that a spacing can be reserved between the first uncoated foil region 112 and the second uncoated foil region 122, reducing the likelihood of a short circuit occurring due to contact between the first uncoated foil region 112 and the second uncoated foil region 122.

In some embodiments, the first electrode plate 110 includes a first coated region 113. Along a length direction Y of the first electrode plate, the first uncoated foil region 112 does not extend beyond the first coated region 113, and along a width direction Z of the first electrode plate, the first uncoated foil region 112 does not extend beyond the first coated region 113.

The first coated region 113 may refer to a region coated with an active material or a region coated with another coating such as a ceramic coating.

Along the length direction Y of the first electrode plate, the first uncoated foil region 112 does not extend beyond the first coated region 113, and along the width direction Z of the first electrode plate, the first uncoated foil region 112 does not extend beyond the first coated region 113, so that the first uncoated foil region 112 does not protrude from the first electrode plate 110, and no space needs to be reserved between the electrode assembly 100 and the housing 300 to accommodate the first uncoated foil region 112, thereby further increasing the energy density of the battery cell 10. Additionally, when the battery cell 10 is subjected to an external force or drops, the likelihood of the electrode assembly 100 shaking relative to the housing 300 is further reduced, and the likelihood of a short circuit occurring due to contact between the first uncoated foil region 112 and the second electrode plate 120 is further reduced, thereby further reducing the risk of thermal runaway in the battery cell 10.

In some embodiments, the second electrode plate 120 includes a second coated region 123. Along a length direction of the second electrode plate, the second uncoated foil region 122 does not extend beyond the second coated region 123, and along a width direction of the second electrode plate, the second uncoated foil region 122 does not extend beyond the second coated region 123.

Along the length direction of the second electrode plate, the second uncoated foil region 122 does not extend beyond the second coated region 123, and along the width direction of the second electrode plate, the second uncoated foil region 122 does not extend beyond the second coated region 123, so that the second uncoated foil region 122 does not protrude from the second electrode plate 120, and no space needs to be reserved between the electrode assembly 100 and the housing 300 to accommodate the second uncoated foil region 122, thereby further increasing the energy density of the battery cell 10. Additionally, when the battery cell 10 is subjected to an external force or drops, the likelihood of the electrode assembly 100 shaking relative to the housing 300 is further reduced, and the likelihood of a short circuit occurring due to contact between the second uncoated foil region 122 and the first electrode plate 110 is further reduced, thereby further reducing the risk of thermal runaway in the battery cell 10.

In some embodiments, the length direction of the second electrode plate is parallel to the length direction Y of the first electrode plate, and the width direction of the second electrode plate is parallel to the width direction Z of the first electrode plate.

In some embodiments, an electrode plate includes a current collector and an active material layer. A coated region may refer to a region coated with an active material or a region coated with another coating such as a ceramic coating. An uncoated foil region refers to a region of the current collector not coated with the active material layer.

In some embodiments, the first coated region 113 includes a first edge 1131 in the length direction Y of the first electrode plate, the first uncoated foil region 112 includes a second edge 1121 along the length direction Y of the first electrode plate, and the first edge 1131 is flush with the second edge 1121.

The first edge 1131 being flush with the second edge 1121 can facilitate preparation of the first uncoated foil region 112.

In some embodiments, the second coated region 123 includes a third edge 1231 along the width direction of the second electrode plate, the second uncoated foil region 122 includes a fourth edge 1221 along the width direction of the second electrode plate, and the third edge 1231 is flush with the fourth edge 1221.

The third edge 1231 being flush with the fourth edge 1221 can facilitate preparation of the second uncoated foil region 122.

Referring to FIG. 6, FIG. 6 is a schematic local enlarged view of a partial structure of a battery cell according to some embodiments of this application.

In some embodiments, a spacing distance between the first uncoated foil region 112 and the second uncoated foil region 122 is denoted as D1, satisfying 0.4 mm ≤ D1 ≤ 1 mm. For example, D1 may be 0.4 mm, 0.7 mm, 1 mm, or the like. The spacing distance herein refers to a distance between two closest points of the first uncoated foil region 112 and the second uncoated foil region 122.

When the spacing distance D1 between the first uncoated foil region 112 and the second uncoated foil region 122 is greater than or equal to 0.4 mm, the spacing distance between the first uncoated foil region 112 and the second uncoated foil region 122 is relatively large, reducing the likelihood of a short circuit occurring due to contact between the first uncoated foil region 112 and the second uncoated foil region 122, thereby reducing the risk of thermal runaway in the battery cell 10. When the spacing distance D1 between the first uncoated foil region 112 and the second uncoated foil region 122 is less than or equal to 1 mm, the spacing distance between the first uncoated foil region 112 and the second uncoated foil region 122 is relatively small, so that a small spacing is occupied, which is conducive to increasing the energy density of the battery cell 10. When the spacing distance D1 between the first uncoated foil region 112 and the second uncoated foil region 122 is between 0.4 mm and 1 mm, the likelihood of a short circuit occurring due to contact between the first uncoated foil region 112 and the second uncoated foil region 122 is reduced, reducing the risk of thermal runaway in the battery cell 10 and helping to increase the energy density of the battery cell 10.

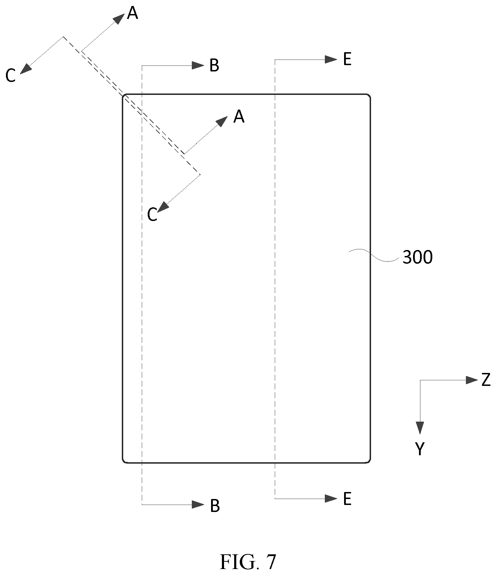

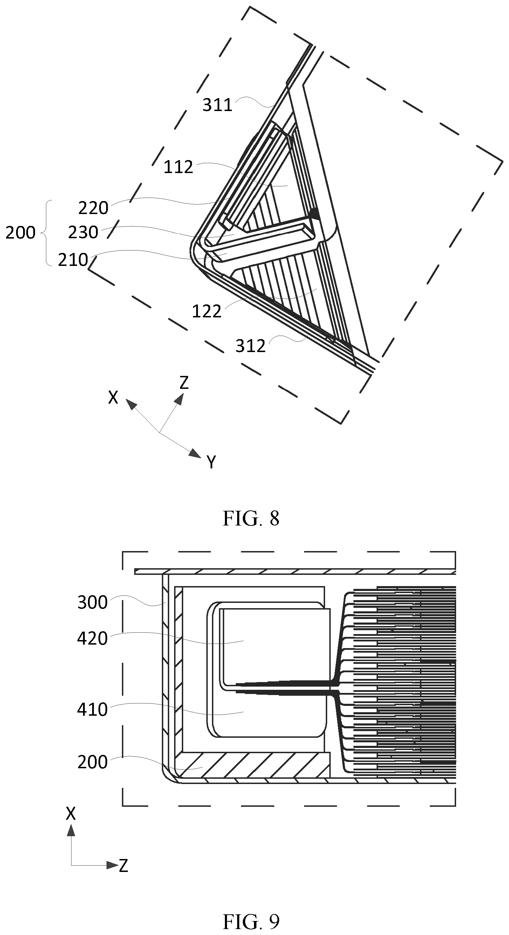

Referring to FIG. 7 and FIG. 8, FIG. 7 is a schematic structural diagram of a battery cell from one perspective according to some embodiments of this application, and FIG. 8 is a schematic local structural enlarged view of a partial structure of a battery cell according to some embodiments of this application.

In some embodiments, the battery cell 10 further includes a first insulating member 200, and at least a portion of the first insulating member 200 is disposed between the first uncoated foil region 112 and the second uncoated foil region 122.

The provision of the first insulating member 200 between the first uncoated foil region 112 and the second uncoated foil region 122 can reduce the likelihood of a short circuit occurring due to contact between the first uncoated foil region 112 and the second uncoated foil region 122, thereby reducing the risk of thermal runaway in the battery cell 10.

In some embodiments, the first insulating member 200 may be made of polymeric insulating materials such as polyethylene terephthalate (PET), polypropylene (PP), or polyethylene (PE).

In some embodiments, the first insulating member 200 wraps at least a portion of the plurality of first uncoated foil regions 112.

Making the first insulating member 200 wrap at least a portion of the plurality of first uncoated foil regions 112 can achieve a better insulation effect between the first uncoated foil region 112 and the second uncoated foil region 122, further reducing the likelihood of a short circuit occurring due to contact between the first uncoated foil region 112 and the second uncoated foil region 122, thereby further reducing the risk of thermal runaway in the battery cell 10.

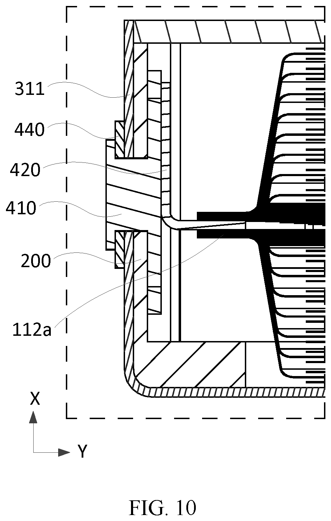

Referring to FIG. 8 to FIG. 10, FIG. 9 is a schematic local enlarged view of a cross-sectional structure of the battery cell in FIG. 7 along A-A direction, and FIG. 10 is a schematic local enlarged view of a cross-sectional structure of the battery cell in FIG. 7 along B-B direction.

In some embodiments, the battery cell 10 further includes a housing 300, and the electrode assembly 100 is disposed within the housing 300. When observed along the first direction X, the first insulating member 200 includes a first insulating portion 210 and a second insulating portion 220. The first insulating portion 210 is disposed between the first uncoated foil region 112 and the second uncoated foil region 122, and the second insulating portion 220 is disposed between the first uncoated foil region 112 and an inner wall of the housing 300.

When observed along the first direction X, the first insulating member 200 includes a first insulating portion 210 and a second insulating portion 220, where the first insulating portion 210 is disposed between the first uncoated foil region 112 and the second uncoated foil region 122, and the second insulating portion 220 is disposed between the first uncoated foil region 112 and the inner wall of the housing 300, so that the first insulating portion 210 can provide insulation between the first uncoated foil region 112 and the second uncoated foil region 122, and the second insulating portion 220 can provide insulation between the first uncoated foil region 112 and the housing 300, reducing the likelihood of a short circuit occurring due to contact between the first uncoated foil region 112 and the first uncoated foil region 112 or contact between the first uncoated foil region 112 and the housing 300, thereby reducing the risk of thermal runaway in the battery cell 10.

In some embodiments, the housing 300 may be made of high-strength materials, for example, a metal material such as steel or aluminum alloy, so that the housing 300 achieves a high force bearing capacity, reducing the likelihood of deformation or damage of the housing 300 due to an external force or environmental change, thereby increasing the reliability of the battery cell 10.

In some other embodiments, the housing 300 may alternatively be made of high-strength non-metallic materials, such as carbon fibers or hard plastic.

In some embodiments, the battery cell 10 further includes an electrode terminal 410 and a first adapter 420. The first adapter 420 is connected to the plurality of first uncoated foil regions 112. The housing 300 includes a first wall 311, and the electrode terminal 410 is disposed on the first wall 311. The second insulating portion 220 is disposed between the first wall 311 and the first uncoated foil region 112, and the electrode terminal 410 penetrates through the second insulating portion 220 and is connected to the first adapter 420.

The first adapter 420 is connected to the plurality of first uncoated foil regions 112, the housing 300 includes a first wall 311, the electrode terminal 410 is disposed on the first wall 311, the second insulating portion 220 is disposed between the first wall 311 and the first uncoated foil region 112, and the electrode terminal 410 penetrates through the second insulating portion 220 and is connected to the first adapter 420, so that the plurality of first uncoated foil regions 112 can be electrically connected to an external apparatus through the first adapter 420 and the electrode terminal 410, and the second insulating portion 220 can provide insulation between the electrode terminal 410 and the housing 300, reducing the likelihood of a short circuit between the first uncoated foil region 112 and the housing 300, thereby reducing the risk of thermal runaway in the battery cell 10.

In some embodiments, the first adapter 420 is bent, where a portion of the first adapter 420 is perpendicular to the first wall 311, facilitating connection to the first uncoated foil region 112, and another portion of the first adapter 420 is parallel to the first wall 311, facilitating connection to the electrode terminal 410.

In some embodiments, a portion of the first adapter 420 is disposed between two adjacent first uncoated foil regions 112 among the plurality of first uncoated foil regions 112, enabling a larger connection area between the first adapter 420 and the plurality of first uncoated foil regions 112, thereby improving the connection reliability.

In some other embodiments, the first adapter 420 may alternatively be disposed on a side of the plurality of first uncoated foil regions 112 along the first direction X.

In some embodiments, the battery cell 10 further includes a second insulating member 440, where the second insulating member 440 is disposed between an electrode terminal 410 and an outer side of the first wall 311.

By disposing the second insulating member 440 between the electrode terminal 410 and the outer side of the first wall 311, the likelihood of a short circuit occurring due to contact between the electrode terminal 410 and the housing 300 can be reduced, thereby reducing the risk of thermal runaway in the battery cell 10.

In some embodiments, the second insulating member 440 may be made of polymeric insulating materials such as polyethylene terephthalate (PET), polypropylene (PP), or polyethylene (PE).

In some embodiments, a first insulating member 200 further includes a third insulating portion 230, where the third insulating portion 230 is disposed on a side of a plurality of first uncoated foil regions 112 along the first direction X, and the third insulating portion 230 is connected to the first insulating portion 210 and the second insulating portion 220.

The third insulating portion 230 is disposed on the side of the plurality of first uncoated foil regions 112 along the first direction X, and the third insulating portion 230 is connected to the first insulating portion 210 and the second insulating portion 220, so that insulation can be provided between the first uncoated foil region 112 and the housing 300 in the first direction X, reducing the likelihood of a short circuit occurring due to contact between the first uncoated foil region 112 and the housing 300, thereby reducing the risk of thermal runaway in the battery cell 10.

In some embodiments, along the first direction X, the first uncoated foil regions 112 of the plurality of first electrode plates 110 converge toward a center to form a first converged portion 112a.

Along the first direction X, the first uncoated foil regions 112 of the plurality of first electrode plates 110 converge toward a center to form a first converged portion 112a, so that the plurality of first uncoated foil regions 112 can be connected in a simple manner, achieving simple operation, facilitating connection of the plurality of first uncoated foil regions 112 to the first adapter 420. Since some first uncoated foil regions 112 need to be bent and extend for a certain length to be connected to an adjacent first uncoated foil region 112, converging the plurality of first uncoated foil regions 112 toward the center can reduce a dimension of the first uncoated foil region 112 in an extension direction thereof (that is, a direction perpendicular to a bent edge of the first uncoated foil region 112), reducing the space occupied by the first uncoated foil region 112, which is conducive to increasing the energy density of the battery cell 10.

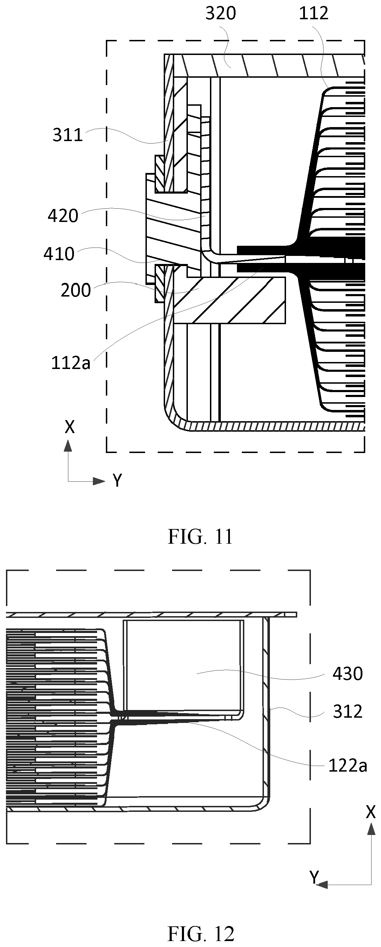

Referring to FIG. 11, FIG. 11 is a schematic local enlarged view of a cross-sectional structure of a battery cell according to some other embodiments of this application.

In some other embodiments, the third insulating portion 230 supports the first converged portion 112a.

The housing 300 includes a shell 310 and a shell cover 320. During assembly of the battery cell 10, the electrode assembly 100 is first placed into the shell 310, and after the first adapter 420 is connected to the electrode terminal 410, the shell cover 320 is disposed on the shell 310. If the first converged portion 112a is in a suspended state after the electrode assembly 100 is placed into the shell 310, connecting the first adapter 420 to the electrode terminal 410 may cause positional displacement of the first converged portion 112a due to a force received, affecting the connection between the first adapter 420 and the electrode terminal 410. Therefore, the third insulating portion 230 supporting the first converged portion 112a can facilitate the connection between the first adapter 420 and the electrode terminal 410.

Referring to FIG. 12, FIG. 12 is a schematic local enlarged view of a cross-sectional structure of the battery cell in FIG. 7 along C-C direction.

In some embodiments, along the first direction X, the second uncoated foil regions 122 of the plurality of second electrode plates 120 converge toward a center to form a second converged portion 122a. The battery cell 10 further includes a second adapter 430, where the second adapter 430 connects the housing 300 and the second converged portion 122a.

Along the first direction X, the second uncoated foil regions 122 of the plurality of second electrode plates 120 converge toward a center to form a second converged portion 122a, the battery cell 10 further includes a second adapter 430, and the second adapter 430 connects the housing 300 and the second converged portion 122a, so that the plurality of second uncoated foil regions 122 can be connected in a simple manner, achieving simple operation, facilitating connection of the plurality of second uncoated foil regions 122 to the first adapter 420, and allowing for a small dimension of the second uncoated foil region 122 in an extension direction of the second uncoated foil region 122, thereby reducing the space occupied by the second uncoated foil region 122, which is conducive to increasing the energy density of the battery cell 10. Furthermore, the plurality of second uncoated foil regions 122 can be electrically connected to an external apparatus through the second adapter 430 and the housing 300.

In some embodiments, the housing 300 includes a second wall 312, and the second adapter 430 is connected to the second wall 312.

In some embodiments, the second adapter 430 is bent, where a portion of the second adapter 430 is perpendicular to the second wall 312, facilitating connection to the second uncoated foil region 122, and another portion of the second adapter 430 is parallel to the second wall 312, facilitating connection to the second wall 312.

In some embodiments, a portion of the second adapter 430 is disposed between two adjacent second uncoated foil regions 122 among the plurality of second uncoated foil regions 122, enabling a larger connection area between the second adapter 430 and the plurality of second uncoated foil regions 122, thereby improving the connection reliability.

In some other embodiments, the second adapter 430 may alternatively be disposed on a side of the plurality of second uncoated foil regions 122 along the first direction X.

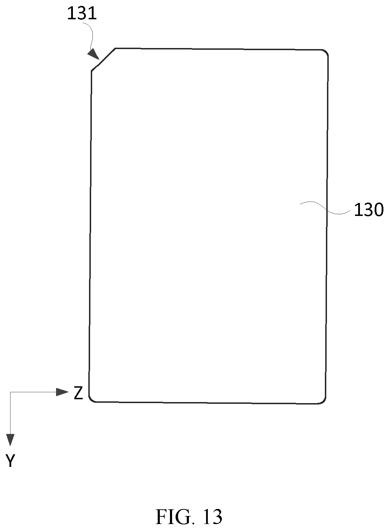

Referring to FIG. 13, FIG. 13 is a schematic structural diagram of a separator of a battery cell according to some embodiments of this application.

In some embodiments, the electrode assembly 100 further includes a separator 130, where the separator 130 is disposed between the first electrode plate 110 and the second electrode plate 120. The separator 130 includes a third notch 131. Along the first direction X, the first uncoated foil region 112 and third notch 131 at least partially overlap, and the second uncoated foil region 122 and the third notch 131 at least partially overlap.

Along the first direction X, by enabling the first uncoated foil region 112 and the third notch 131 to at least partially overlap and enabling the second uncoated foil region 122 and the third notch 131 to at least partially overlap, the third notch 131 can be configured to accommodate the first uncoated foil region 112 and the second uncoated foil region 122, facilitating connection of the plurality of first uncoated foil regions 112 and connection of the plurality of second uncoated foil regions 122, respectively.

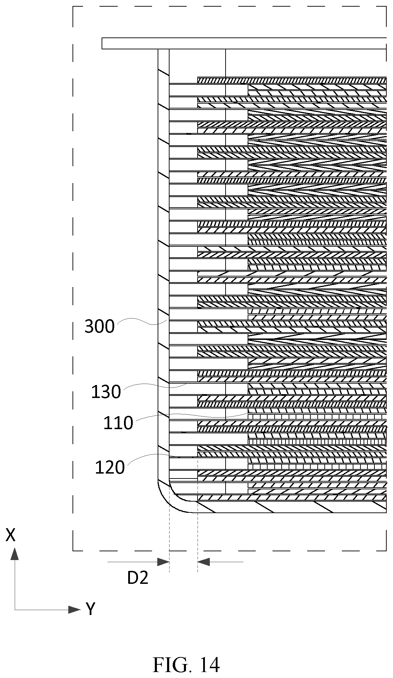

Referring to FIG. 14, FIG. 14 is a schematic local enlarged view of a cross-sectional structure of the battery cell in FIG. 7 along E-E direction.

In some embodiments, the second notch 121 and the second uncoated foil region 122 are located at an end of the second electrode plate in the length direction. The battery cell 10 further includes a housing 300, and the electrode assembly 100 is accommodated within the housing 300. Along the length direction of the second electrode plate, a distance from the end of the second electrode plate 120 provided with the second uncoated foil region 122 and the second notch 121 to the inner wall of the housing 300 is denoted as D2, satisfying 0.4 mm ≤ D2 ≤ 1 mm. For example, D2 may be 0.4 mm, 0.6 mm, 1 mm, or the like.

The second notch 121 and the second uncoated foil region 122 are located at an end of the second electrode plate in the length direction, so that the first uncoated foil region 112 and the second uncoated foil region 122 can be led out of the end of the second electrode plate in the length direction, facilitating electrical connection of the battery cell 10 to an external apparatus through the first uncoated foil region 112 and the second uncoated foil region 122. The distance D2 from the end of the second electrode plate 120 provided with the second uncoated foil region 122 and the second notch 121 to the inner wall of the housing 300 along the length direction of the second electrode plate being greater than or equal to 0.4 mm can facilitate assembly of the electrode assembly 100 and the housing 300 and helps an electrolyte to be accommodated in the housing 300. The distance D2 from the end of the second electrode plate 120 provided with the second uncoated foil region 122 and the second notch 121 to the inner wall of the housing 300 along the length direction of the second electrode plate being less than or equal to 1 mm allows for a small spacing between the electrode assembly 100 and the housing 300, resulting in a high energy density of the battery cell 10. Therefore, the distance D2 from the end of the second electrode plate 120 provided with the second uncoated foil region 122 and the second notch 121 to the inner wall of the housing 300 along the length direction of the second electrode plate being between 0.4 mm and 1 mm can not only facilitate assembly of the electrode assembly 100 and the housing 300 and help the electrolyte to be accommodated in the housing 300, but also allow for a high energy density of the battery cell 10.

In some embodiments, the first notch 111 is configured in a triangular shape.

The first notch 111 being configured in a triangular shape facilitates preparation of the first notch 111 and allows for a small space occupied by the first notch 111 is reduced, helping to increase the energy density of the battery cell 10.

In some embodiments, the second notch 121 is configured in a triangular shape.

The second notch 121 being configured in a triangular shape facilitates preparation of the second notch 121 and allows for a small space occupied by the second notch 121.

In some other embodiments, the first notch 111 and the second notch 121 may alternatively be configured in a trapezoidal shape.

In some embodiments, the first uncoated foil region 112 is configured in a triangular shape.

The first uncoated foil region 112 being configured in a triangular shape facilitates preparation of the first uncoated foil region 112, facilitates convergence of the plurality of first uncoated foil regions 112, and allows for a small space occupied by the first uncoated foil region 112, helping to increase the energy density of the battery cell 10.

In some embodiments, the third insulating portion 230 is configured in a triangular shape, so that the first insulating member 200 can wrap the first uncoated foil region 112 and allow for a small space occupied by the first insulating member 200, helping to increase the energy density of the battery cell 10.

In some embodiments, the second uncoated foil region 122 is configured in a triangular shape.

The second uncoated foil region 122 being configured in a triangular shape facilitates preparation of the second uncoated foil region 122, facilitates convergence of the plurality of second uncoated foil regions 122, and allows for a small space occupied by the second uncoated foil region 122, helping to increase the energy density of the battery cell 10.

In some embodiments, the first electrode plate 110 is a positive electrode plate, and the second electrode plate 120 is a negative electrode plate.

The battery cell 10 includes an electrode assembly 100, a housing 300, and an electrolyte, where the housing 300 is configured to accommodate the electrode assembly 100 and the electrolyte. The electrode assembly 100 includes a positive electrode plate, a negative electrode plate, and a separator. The battery cell 10 operates primarily depending on the movement of metal ions between the positive electrode plate and the negative electrode plate. The positive electrode plate includes a positive electrode current collector and a positive electrode active material layer, where the positive electrode active material layer is applied on a surface of the positive electrode current collector, and a portion of the positive electrode current collector not coated with the positive electrode active material layer serves as a positive electrode tab (that is, the first uncoated foil region 112), to enable input or output of electrical energy of the positive electrode plate through the positive electrode tab. For a lithium-ion battery, the positive electrode current collector may be made of aluminum, and the positive electrode active material may be lithium cobalt oxide, lithium iron phosphate, a ternary material, lithium manganese oxide, or the like. The negative electrode plate includes a negative electrode current collector and a negative electrode active material layer, where the negative electrode active material layer is applied on a surface of the negative electrode current collector, and a portion of the negative electrode current collector not coated with the negative electrode active material layer serves as a negative electrode tab (that is, the second uncoated foil region 122), to enable input or output of electrical energy of the negative electrode plate through the negative electrode tab. The negative electrode current collector may be made of copper, and the negative electrode active material may be a carbon material, a silicon material, or the like. The separator may be made of polypropylene (PP), polyethylene (PE), or the like. The electrolyte may include an organic solvent, an electrolytic lithium salt, and the like.

An embodiment of this application provides an electric device. The electric device includes the battery cell 10 provided in any of the above embodiments, where the battery cell 10 is configured to provide electrical energy.

The electric device may be any device or system utilizing the battery cell 10 as described above.

It should be noted that, without conflict, some embodiments and features in these embodiments of this application may be combined with each other.

The above descriptions are only preferred embodiments of this application and are not intended to limit this application. For those skilled in the art, various modifications and changes may be made to this application. Any modifications, equivalent substitutions, improvements, and the like made within the spirit and principles of this application shall be included within the protection scope of this application.

## Claims

1. A battery cell, comprising an electrode assembly, wherein the electrode assembly is a laminated structure, the electrode assembly comprises a plurality of first electrode plates and a plurality of second electrode plates stacked along a first direction, and the first electrode plates and the second electrode plates have opposite polarities;
a corner of each first electrode plate comprises a first notch and a first uncoated foil region, and a corner of each second electrode plate comprises a second notch and a second uncoated foil region, wherein when observed along the first direction, the first uncoated foil region and the second notch at least partially overlap, the second uncoated foil region and the first notch at least partially overlap, and the first uncoated foil region and the second uncoated foil region are spaced apart; and
the first uncoated foil regions of the plurality of first electrode plates are stacked along the first direction, and the second uncoated foil regions of the plurality of second electrode plates are stacked along the first direction.

2. The battery cell according to claim 1, wherein when observed along the first direction, the first notch and the second notch partially overlap.

3. The battery cell according to claim 1, wherein the first electrode plate comprises a first coated region, the first uncoated foil region does not extend beyond the first coated region along a length direction of the first electrode plate, and the first uncoated foil region does not extend beyond the first coated region along a width direction of the first electrode plate; and
the second electrode plate comprises a second coated region, the second uncoated foil region does not extend beyond the second coated region along a length direction of the second electrode plate, and the second uncoated foil region does not extend beyond the second coated region along a width direction of the second electrode plate.

4. The battery cell according to claim 3, wherein the first coated region comprises a first edge in the length direction of the first electrode plate, the first uncoated foil region comprises a second edge in the length direction of the first electrode plate, and the first edge is flush with the second edge;
and/or,
the second coated region comprises a third edge in the width direction of the second electrode plate, the second uncoated foil region comprises a fourth edge in the width direction of the second electrode plate, and the third edge is flush with the fourth edge.

5. The battery cell according to claim 1, wherein a spacing distance between the first uncoated foil region and the second uncoated foil region is denoted as D1, satisfying 0.4 mm ≤ D1 ≤ 1 mm.

6. The battery cell according to any one of claims 1 to 5, wherein the battery cell further comprises a first insulating member, and at least a portion of the first insulating member is disposed between the first uncoated foil region and the second uncoated foil region.

7. The battery cell according to claim 6, wherein the first insulating member wraps at least a portion of the plurality of first uncoated foil regions.

8. The battery cell according to claim 6, wherein the battery cell further comprises a housing, and the electrode assembly is disposed within the housing; and
when observed along the first direction, the first insulating member comprises a first insulating portion and a second insulating portion, the first insulating portion is disposed between the first uncoated foil region and the second uncoated foil region, and the second insulating portion is disposed between the first uncoated foil region and an inner wall of the housing.

9. The battery cell according to claim 8, wherein the battery cell further comprises an electrode terminal and a first adapter, the first adapter is connected to the plurality of first uncoated foil regions, the housing comprises a first wall, the electrode terminal is disposed on the first wall, the second insulating portion is disposed between the first wall and the first uncoated foil region, and the electrode terminal penetrates through the second insulating portion and is connected to the first adapter.

10. The battery cell according to claim 8, wherein the first insulating member further comprises a third insulating portion, the third insulating portion is disposed on a side of the plurality of first uncoated foil regions along the first direction, and the third insulating portion is connected to the first insulating portion and the second insulating portion.

11. The battery cell according to claim 10, wherein along the first direction, the first uncoated foil regions of the plurality of first electrode plates converge toward a center to form a first converged portion, and the third insulating portion supports the first converged portion.

12. The battery cell according to any one of claims 1 to 5, wherein along the first direction, the second uncoated foil regions of the plurality of second electrode plates converge toward a center to form a second converged portion; the battery cell further comprises a second adapter; and the second adapter connects the housing and the second converged portion.

13. The battery cell according to any one of claims 1 to 5, wherein the second notch and the second uncoated foil region are located at an end of the second electrode plate in a length direction; and
the battery cell further comprises a housing, the electrode assembly is accommodated within the housing, and a distance from an end of the second electrode plate provided with the second uncoated foil region and the second notch to an inner wall of the housing along the length direction of the second electrode plate is denoted as D2, satisfying 0.4 mm ≤ D2 ≤ 1 mm.

14. The battery cell according to any one of claims 1 to 5, wherein the first notch is configured in a triangular shape; and/or, the second notch is configured in a triangular shape.

15. The battery cell according to any one of claims 1 to 5, wherein the first uncoated foil region is configured in a triangular shape; and/or, the second uncoated foil region is configured in a triangular shape.

16. The battery cell according to any one of claims 1 to 5, wherein the first electrode plate is a positive electrode plate, and the second electrode plate is a negative electrode plate.

17. An electric device, comprising the battery cell according to any one of claims 1 to 16, wherein the battery cell is configured to provide electrical energy.
